(19) Europäisches Patentamt
European Patent Office
Office européen des brevets

(11) EP 4 546 544 A1

(12) **EUROPEAN PATENT APPLICATION**
published in accordance with Art. 153(4) EPC

(43) Date of publication:
**30.04.2025 Bulletin 2025/18**

(21) Application number: **22967456.9**

(22) Date of filing: **05.12.2022**

(51) International Patent Classification (IPC):
***H01M 50/449*** *(2021.01)* ***H01M 50/40*** *(2021.01)*
***H01M 10/0525*** *(2010.01)*

(52) Cooperative Patent Classification (CPC):
**H01M 10/0525; H01M 50/40; H01M 50/449**

(86) International application number:
**PCT/CN2022/136431**

(87) International publication number:
**WO 2024/119288 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Hong Kong (CN)**

(72) Inventors:
- **WEI, Manxiang**
  **Ningde City, Fujian 352100 (CN)**
- **YANG, Jianrui**
  **Ningde City, Fujian 352100 (CN)**
- **XU, Ming**
  **Ningde City, Fujian 352100 (CN)**

(74) Representative: **Kraus & Lederer PartGmbB**
**Thomas-Wimmer-Ring 15**
**80539 München (DE)**

(54) **SEPARATOR AND PREPARATION METHOD THEREFOR, SECONDARY BATTERY, AND ELECTRIC DEVICE**

(57) This application provides a separator and a preparation method thereof, a secondary battery, and an electric apparatus. The separator includes a substrate and a coating, with the coating being provided on at least one side of the substrate and the coating including organic materials, where a weight per unit area of the coating for a single side is denoted as M, a thickness of the coating for a single side is denoted as H, and a true density of the organic materials is denoted as $\rho_{organic}$, and the separator satisfies $M/(H \times \rho_{organic}) \geq 0.4$, where M is in unit of $g/m^2$, H is in unit of $\mu m$, and $\rho_{organic}$ is in unit of $g/cm^3$. The separator features properties such as good heat resistance and ion transport properties, enabling batteries with the separator to improve their thermal safety performance and cycling performance.

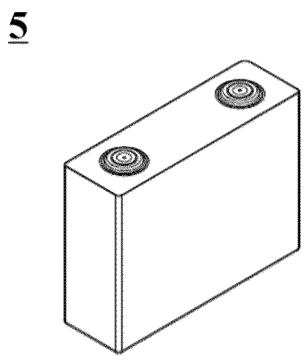


FIG. 1



Processed by Luminess, 75001 PARIS (FR)

## Description

## TECHNICAL FIELD

This application pertains to the field of battery technologies, and specifically relates to a separator and a preparation method thereof, a secondary battery, and an electric apparatus.

## BACKGROUND

Batteries are widely used in many fields such as power tools, electric transportation tools, aerospace and aviation, and energy storage device, due to their good electrochemical performance and safety performance and other characteristics. As batteries are widely used in various fields, their thermal safety performance and cycling performance have become two focuses of battery performance.

At present, the thermal safety performance of batteries still has the defect of decreasing when heated, and their cycling performance also decreases. Therefore, there is an urgent need to improve the thermal safety performance and cycling performance of batteries.

## SUMMARY

This application is intended to provide a separator and a preparation method thereof, a secondary battery, and an electric apparatus. The separator features properties such as good heat resistance and ion transport properties, enabling secondary batteries with the separator to improve their thermal safety performance and cycling performance.

A first aspect of this application provides a separator including a substrate and a coating, with the coating being provided on at least one side of the substrate and the coating including granular organic materials, where a weight per unit area of the coating for a single side is denoted as M, a thickness of the coating for a single side is denoted as H, a true density of the organic materials is denoted as $\rho_{\text{organic}}$, and the separator satisfies: $M/(H \times \rho_{organic}) \geq 0.4$, where M is in unit of $g/m^2$, H is in unit of $\mu m$, and $\rho_{organic}$ is in unit of $g/cm^3$.

In the separator according to this application, the coating includes granular organic materials, and the separator satisfies $0.4 \leq M/(H \times \rho_{\text{organic}})$. This enables the rational packing of the organic materials in the coating. When the separator is heated, the mutual squeezing between the organic materials can provide a force opposite to a direction of shrinkage of the separator, reducing the shrinkage level of the separator, which in turn can reduce the risk of short circuit between the positive electrode and negative electrode in the battery using this separator, thereby providing the battery with good thermal safety performance. In addition, while allowing the organic materials to pack reasonably in the coating, this also enables the overlapping between the organic materials to form more ion transport channels. Through these ion transport channels, the infiltration of the electrolyte into the separator and its storage inside the separator can be enhanced, thereby facilitating ion transport and improving the cycling performance of the battery.

In any embodiment of this application, $0.5 \leq M/(H \times \rho_{\text{organic}}) \leq 0.8$. The separator satisfying the foregoing relationship can enable organic materials to be packed more tightly in the coating to further reduce the shrinkage level of the separator. This further enables the battery to have good thermal safety performance, and also leads to further improvement in the cycling performance of the battery.

In any embodiment of this application, $\rho_{organic} \leq 2.5$. The true density of the organic material being set within the foregoing suitable range can contribute to reducing the weight of the battery using the separator, thereby increasing the mass energy density of the battery.

In any embodiment of this application, $0.8 \leq \rho_{organic} \leq 2.0$.

In any embodiment of this application, $M \geq 0.5$. The weight per unit area of the coating for a single side satisfying the foregoing relationship can enable organic materials in the coating to be packed more tightly and enable adjacent organic materials to overlap each other. When the separator is heated, the mutual squeezing between the organic materials can provide a force opposite to a direction of shrinkage of the separator, further reducing the shrinkage level of the separator and thereby reducing the occurrence of short circuits between the positive electrode plate and negative electrode plate.

In any embodiment of this application, $0.7 \leq M \leq 3.0$.

In any embodiment of this application, $H \leq 3.0$. The thickness H of the coating for a single side satisfying the foregoing relationship can contribute to tight packing between the organic materials to further improve the thermal safety performance of the battery.

In any embodiment of this application, $0.5 \leq H \leq 2.0$.

In any embodiment of this application, $M/H \geq 0.3$.

In any embodiment of this application, $0.5 \leq M/H \leq 1.0$.

In any embodiment of this application, a mass proportion of the organic materials in the coating is greater than or

equal to 60%, optionally 75% to 95%.

In any embodiment of this application, the organic materials include one or more of organic silicone particles, melamine formaldehyde resin particles, phenolic resin particles, polyester particles, polyimide particles, polyamideimide particles, polyaramide particles, polyphenylene sulfide particles, polysulfone particles, polyethersulfone particles, polyether ether ketone particles, and polyaryl ether ketone particles; and optionally, the organic materials include organic silicone particles.

In any embodiment of this application, the organic materials include organic silicone particles, and the organic silicone particle includes a first polymer, the first polymer including a first structural unit, a second structural unit, and a third structural unit.

The first structural unit has a structure represented by formula (I):

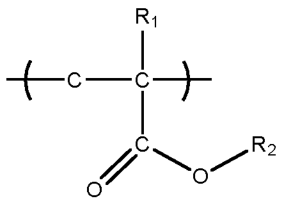
formula (I);

where

in the formula (I), $R_1$ includes one or more of a hydrogen atom or a substituted or unsubstituted C1-C5 alkyl; and optionally, $R_1$ includes one or more of a hydrogen atom or a substituted or unsubstituted C1-C3 alkyl; and
$R_2$ includes one or more of a substituted or unsubstituted C1-C20 alkyl, a substituted or unsubstituted C3-C20 cycloalkyl, and a substituted or unsubstituted C1-C20 hydroxyalkyl; and optionally, $R_2$ includes one or more of a C1-C12 alkyl, a C3-C12 cycloalkyl, and a C1-C12 hydroxyalkyl.

The second structural unit is represented by formula (II):

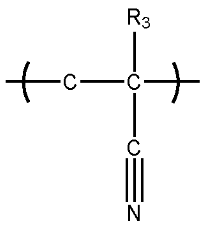
formula (II);

where
in the formula (II), $R_3$ includes one or more of a hydrogen atom or a substituted or unsubstituted C1-C5 alkyl; and optionally, $R_3$ includes one or more of a hydrogen atom or a substituted or unsubstituted C1-C3 alkyl.

The third structural unit is represented by formula (III):

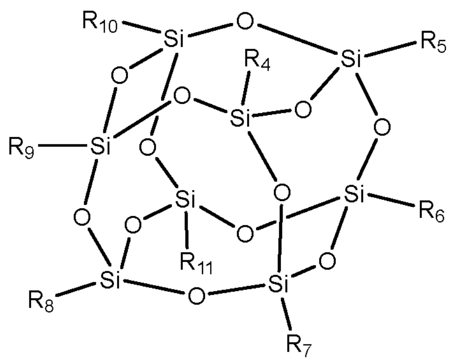
formula (III);

where
in the formula (III), $R_4$ to $R_{11}$ each independently include one or more of a substituted or unsubstituted C1-C10 alkyl or a

structural unit represented by formula (III-1), where at least one of $R_4$ to $R_{11}$ is the structural unit represented by formula (III-1),

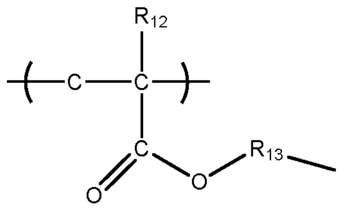 formula (III-1);

where

in the formula (III-1), $R_{12}$ includes one or more of a hydrogen atom or a substituted or unsubstituted C1-C5 alkyl; and optionally, $R_{12}$ includes one or more of a hydrogen atom or a substituted or unsubstituted C1-C3 alkyl; and $R_{13}$ includes a substituted or unsubstituted C1-C10 alkyl; and optionally, $R_{13}$ includes a substituted or unsubstituted C3-C10 alkyl.

In any embodiment of this application, based on a total molar amount of the first structural unit, the second structural unit, and the third structural unit, a molar amount of the first structural unit is denoted as a%, where 70≤a≤90; and optionally, 75≤a≤85; and/or, based on the total molar amount of the first structural unit, the second structural unit, and the third structural unit, a molar amount of the second structural unit is denoted as b%, where 0<b≤18; and optionally, 2≤b≤8; and/or based on the total molar amount of the first structural unit, the second structural unit, and the third structural unit, a molar amount of the third structural unit is denoted as c%, where 0<c≤15; and optionally, 4≤c≤10.

In any embodiment of this application, based on the total molar amount of the first structural unit, the second structural unit, and the third structural unit, a molar amount of the first structural unit is denoted as a%, a molar amount of the second structural unit is denoted as b%, and a molar amount of the third structural unit is denoted as c%; and the organic silicone particles satisfy one or more of condition (1) to condition (3):

$$(1)\ 5 \leq a/b \leq 10;$$

$$(2)\ 6 \leq a/c \leq 15;$$

and

$$(3)\ a:b:c \text{ is } (14\text{–}16):(3\text{–}4):(1\text{–}4).$$

In any embodiment of this application, the organic silicone particles further include a second polymer, the second polymer including a structural unit represented by formula (a):

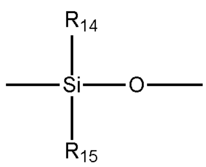 formula (a);

where

in the formula (a), $R_{14}$ and $R_{15}$ each independently include one or more of a substituted or unsubstituted C1-C10 alkyl, hydroxyl, or amino; and optionally, $R_{14}$ and $R_{15}$ each independently include one or more of a substituted or unsubstituted C1-C6 alkyl, hydroxyl, or amino.

In any embodiment of this application, a number average molecular weight of the organic silicone particles is 25,000 to 60,000, optionally 30,000 to 50,000. The number average molecular weight of the organic silicone particles being within the foregoing range is conducive to forming organic silicone particles with a small particle size, and such organic silicone particles, when applied to the separator, allow for a lightweight and thin coating on the separator to reduce the overall thickness of the separator, thereby facilitating an increase in energy density of the battery. Moreover, the risk of

organic silicone particles blocking the substrate in the separator can be reduced, achieving the purpose of improving the overall air permeability of the separator and the like.

In any embodiment of this application, based on a mass of the organic silicone particles, a moisture content of the organic silicone particles is less than or equal to 3000 μg/g, optionally 700 μg/g to 2500 μg/g.

In any embodiment of this application, a particle size by volume $D_v90$ of the organic silicone particles satisfies: $D_V90 \leq 4.0$ μm. The particle size by volume $D_v90$ of the organic silicone particles being set within the foregoing suitable range can increase the packing density thereof and also enable the coating to have a suitable thickness to increase the energy density of the battery.

In any embodiment of this application, the particle size by volume $D_V90$ of the organic silicone particles satisfies: 0.5 $\mu m \leq D_V90 \leq 30$ μm.

In any embodiment of this application, a particle size by volume $D_v50$ of the organic silicone particles satisfies: 1.0 $\mu m \leq D_V50 \leq 2.5$ μm.

In any embodiment of this application, the particle size distribution of the organic silicone particles satisfies: $0.5 \leq (D_V90-D_V10)/D_V50 \leq 1.5$.

In any embodiment of this application, a specific surface area of the organic silicone particles is less than or equal to 35 $m^2/g$, optionally 5 $m^2/g$ to 30 $m^2/g$. The specific surface area of the organic silicone particles being set within the foregoing suitable range can increase the contact area between the organic silicone particles and the electrolyte, thereby helping to improve the electrolyte infiltration and retention effects in the separator.

In any embodiment of this application, a thickness of the substrate is less than or equal to 12 μm.

In any embodiment of this application, the thickness of the substrate is 3 μm to 8 μm.

In any embodiment of this application, the substrate has a porous structure, and a porosity of the substrate is greater than or equal to 20%.

In any embodiment of this application, the porosity of the substrate is 25% to 45%.

In any embodiment of this application, a machine-direction thermal shrinkage rate of the separator at 150°C for 1 hour is less than or equal to 3%.

In any embodiment of this application, a transverse-direction thermal shrinkage rate of the separator at 150°C for 1 hour is less than or equal to 2%.

In any embodiment of this application, an air permeability of the separator is less than or equal to 200 s/100mL.

In any embodiment of this application, the air permeability of the separator is 150 s/100mL to 200 s/100mL.

In any embodiment of this application, a machine-direction tensile strength of the separator is greater than or equal to 2700 $kgf/cm^2$.

In any embodiment of this application, a transverse-direction tensile strength of the separator is greater than or equal to 2500 $kgf/cm^2$.

A second aspect of this application provides a preparation method of the separator according to the first aspect of this application, including the following steps:

providing a substrate;
mixing granular organic materials in a solvent to prepare a coating slurry; and
applying the coating slurry to at least one side of the substrate to form a slurry film layer and forming a coating by drying the slurry film layer, to obtain a separator.

A weight per unit area of the coating for a single side is denoted as M, a thickness of the coating for a single side is denoted as H, a true density of the organic materials is denoted as $\rho_{\text{organic}}$, and the separator satisfies: $M/(H \times \rho_{organic}) \geq 0.4$, where M is in unit of $g/m^2$, H is in unit of μm, and $\rho_{organic}$ is in unit of $g/cm^3$.

A third aspect of this application provides a secondary battery including the separator according to the first aspect of this application or a separator obtained using the preparation method according to the second aspect of this application.

A fourth aspect of this application provides an electric apparatus, including the secondary battery according to the third aspect of this application.

## BRIEF DESCRIPTION OF DRAWINGS

To describe technical solutions in embodiments of this application more clearly, the following briefly describes the accompanying drawings required for describing the embodiments of this application. Apparently, the accompanying drawings in the following descriptions show only some embodiments of this application, and persons of ordinary skill in the art may still derive other drawings from these accompanying drawings without creative efforts.

FIG. 1 is a schematic diagram of an embodiment of a secondary battery in this application.
FIG. 2 is a schematic exploded view of the embodiment of the secondary battery in FIG. 1.

FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack in FIG. 4.
FIG. 6 is a schematic diagram of an embodiment of an electric apparatus including the secondary battery in this application as a power source.

In the accompanying drawings, the figures are not necessarily drawn to scale. Reference signs:
1. battery pack; 2. upper box body; 3. lower box body; 4. battery module; 5. battery cell; 51. housing; 52. electrode assembly; and 53. cover plate.

## DESCRIPTION OF EMBODIMENTS

The following specifically discloses in detail embodiments of a separator and a preparation method thereof, a secondary battery, and an electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.
"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.
Unless otherwise specified, all the embodiments and optional embodiments of this application can be combined with each other to form new technical solutions, and such technical solutions should be considered to be included in the disclosure of this application.
Unless otherwise specified, all the technical features and optional technical features of this application can be combined with each other to form new technical solutions, and such technical solutions should be considered to be included in the disclosure of this application.
Unless otherwise specified, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.
Unless otherwise specified, "include" and "contain" mentioned in this application are inclusive or may be exclusive. For example, the terms "include" and "contain" can mean that other unlisted components may also be included or contained, or only listed components are included or contained.
Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).
In this application, the terms "first" and "second" are merely intended for a purpose of description, and shall not be understood as an indication or implication of relative importance.
In this application, the term "a plurality of" means two or more than two and the term "a plurality of types" means two types or more than two types.
Unless otherwise specified, the terms used in this application have well known meanings commonly understood by persons skilled in the art.
Unless otherwise specified, numerical values of parameters mentioned in this application may be measured by using various test methods commonly used in the art (for example, they may be measured by using the test methods provided in the embodiments of this application).

Generally, a battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive electrode and the negative electrode and allow lithium ions to freely pass through to form a loop.

Batteries are widely used in many fields such as power tools, electric transportation tools, aerospace and aviation, and energy storage device, due to their good electrochemical performance and safety performance and other characteristics. As batteries are widely used in various fields, their thermal safety performance and cycling performance have become two focuses of battery performance.

Separators are an important part of improving the thermal safety performance and cycling performance of batteries. Currently, commercialized batteries use separators typically made of polyolefin membranes that have a relatively low melting point and exhibit a significant thermal shrinkage effect when heated. This can not only reduce ion transport channels, leading to a decrease in ionic conductivity, but also increase the internal resistance of the battery, resulting in a degradation in the cycling performance of the battery. Moreover, the shrinkage of the separator may cause an internal short circuit due to direct contact between the positive and negative electrodes inside the battery, thereby leading to increased safety risks.

In view of this, this application provides a separator and a preparation method thereof, a secondary battery, and an electric apparatus. The separator features properties such as excellent heat resistance and ion transport properties, enabling batteries with the separator to improve their thermal safety performance and cycling performance.

## Separator

A first aspect of this application provides a separator including a substrate and a coating, with the coating being provided on at least one side of the substrate and the coating including granular organic materials, where a weight per unit area of the coating for a single side is denoted as M, a thickness of the coating for a single side is denoted as H, and a true density of the organic materials is denoted as $\rho_{\text{organic}}$, and the separator satisfies $M/(H \times \rho_{\text{organic}}) \geq 0.4$, where M is in unit of $g/m^2$, H is in unit of μm, and $\rho_{organic}$ is in unit of $g/cm^3$.

In the separator according to this application, the coating includes granular organic materials, and the separator satisfies $M/(H \times \rho_{\text{organic}}) \geq 0.4$. This enables the rational packing of the organic materials in the coating. When the separator is heated, the mutual squeezing between the organic materials can provide a force opposite to a direction of shrinkage of the separator, reducing the shrinkage level of the separator, which in turn can reduce the risk of short circuit between the positive electrode and negative electrode in the battery using this separator, thereby providing the battery with good thermal safety performance. In addition, while allowing the organic materials to pack reasonably in the coating, this also enables the overlapping between the organic materials to form more ion transport channels. Through these ion transport channels, the infiltration of the electrolyte into the separator and its storage inside the separator can be enhanced, thereby facilitating ion transport and improving the cycling performance of the battery.

In some embodiments of this application, the separator satisfies: $0.5 \leq M/(H \times \rho_{\text{organic}}) \leq 0.8$. The separator satisfying the foregoing relationship can enable organic materials to be packed more tightly in the coating to further reduce the shrinkage level of the separator. This further enables the battery to have good thermal safety performance, and also leads to further improvement in the cycling performance of the battery.

For example, $M/(H \times \rho_{\text{organic}})$ may be but is not limited to 0.4, 0.45, 0.5, 0.55, 0.6, 0.65, 0.7, 0.75, 0.8, or a range defined by any two of the foregoing values. Optionally, a value range of $M/(H \times \rho_{\text{organic}})$ may be 0.4 to 0.8, 0.45 to 0.75, 0.5 to 0.7, 0.55 to 0.7, or 0.6 to 0.7.

In some embodiments of this application, a true density $\rho_{organic}$ of the organic materials satisfies: $\rho_{organic} \leq 2.5$. The true density of the organic material being set within the foregoing suitable range can contribute to reducing the weight of the battery using the separator, thereby increasing the mass energy density of the battery.

In some other embodiments of this application, the true density $\rho_{organic}$ of the organic materials satisfies: $0.8 \leq \rho_{organic} \leq 2.0$.

In some examples, the true density $\rho_{organic}$ of the organic materials may be but is not limited to 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, or a range defined by any two of the foregoing values, optionally, 0.1 to 2.5, 0.2 to 2.4, 0.3 to 2.3, 0.4 to 2.2, 0.5 to 2.1, 0.6 to 2.0, 0.7 to 1.9, 0.8 to 1.8, 0.9 to 1.7, 1.0 to 1.6, or 1.1 to 1.5.

The true density of the organic materials has a meaning well-known in the art and can be measured using a method known in the art. For example, the measurement can be carried out with reference to GB/T 24586. Specifically, reference may be made to the following steps: taking and placing a clean and dry sample beaker on a balance, taring the balance to zero, adding a powder sample into the sample beaker until the sample beaker is approximately half full, and recording a sample mass; placing the sample beaker with the sample in a true density tester, sealing the test system, and introducing the helium gas, and measuring the pressures of the gas in the sample chamber and an expansion chamber and calculating a true volume based on Bohr's law (PV = nRT), then calculating a true density.

In some embodiments of this application, the weight M per unit area of the coating for a single side satisfies: M≥0.5. The weight per unit area of the coating for a single side satisfying the foregoing relationship can enable organic materials in the coating to be packed more tightly and enable adjacent organic materials to overlap each other. When the separator is heated, the mutual squeezing between the organic materials can provide a force opposite to a direction of shrinkage of the separator, further reducing the shrinkage level of the separator and thereby reducing the occurrence of short circuits between the positive electrode and negative electrode.

In some embodiments of this application, the weight M per unit area of the coating for a single side satisfies: 0.7≤M≤3.0.

In some examples, the weight M per unit area of the coating for a single side may be but is not limited to 0.5, 0.55, 0.6, 0.65, 0.7, 0.75, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, or a range defined by any two of the foregoing values, which, for example, may be 0.5 to 2.0, 0.7 to 2.5, 0.75 to 2.0, 1.0 to 2.5, 1.0 to 2.0, or 1.0 to 1.8.

The weight per unit area of the coating for a single side has a meaning well-known in the art and may be measured using a method known in the art. For example, the measurement can be carried out based on the following steps: taking and punching a separator sample into small discs with an area of $S_1$, weighing the disc, and recording its weight as $M_1$; and then wiping off the coating of the weighed sample, weighing the substrate, and recording its weight as $M_0$; where

1. if the coating is provided on a single side of the substrate, the weight per unit area of the coating for a single side is (M1-M0)/S1; or
2. if the coating is provided on two sides of the substrate, the weight per unit area of the coating for a single side is $(M_1\text{-}M_0)/S_1/2$.

In some embodiments of this application, the thickness H of the coating for a single side satisfies: H≤3.0. The thickness H of the coating for a single side satisfying the foregoing relationship can contribute to tight packing between the organic materials, so that when the separator is heated, the tight packing between the organic materials can quickly provide a force opposite to a direction of shrinkage of the separator, further reducing the shrinkage level of the separator to reduce the occurrence of short circuits between the positive electrode and negative electrode and thereby achieving the purpose of improving the thermal safety performance of the battery.

In some embodiments of this application, the thickness H of the coating satisfies: 0.5≤H≤2.0.

In some examples, the thickness H of the coating may be but is not limited to 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, or a range defined by any two of the foregoing values, which, for example, may be 0.5 to 2.5, 0.7 to 2.5, 0.8 to 2.8, 0.9 to 2.0, 1.0 to 2.5, or 1.0 to 2.0.

The thickness of the coating for a single side has a meaning well-known in the art and may be measured using a method known in the art. For example, the measurement can be carried out using a thickness gauge device with reference to GB/T 36363-2018 Polyolefin separator for lithium-ion battery.

In some embodiments of this application, the weight M per unit area of the coating for a single side and the thickness H of the coating for a single side satisfy: $M/H \geq 0.3$.

In some embodiments of this application, the weight M per unit area of the coating for a single side and the thickness H of the coating for a single side satisfy: $0.5 \leq M/H \leq 1.0$.

It should be noted that the parameters of the coating (for example, thickness and weight per unit area) given in this application all refer to parameters for a coating on a single side. When the coating is provided on two sides of the substrate, parameters for a coating on either side that satisfy this application are considered to fall within the protection scope of this application.

In some embodiments of this application, the organic materials include one or more of organic silicone particles, melamine formaldehyde resin particles, phenolic resin particles, polyester particles, polyimide particles, polyamideimide particles, polyaramide particles, polyphenylene sulfide particles, polysulfone particles, polyethersulfone particles, polyether ether ketone particles, and polyaryl ether ketone particles.

In some embodiments of this application, the organic materials include organic silicone particles. The organic silicone particles refer to organic siloxanes with a main chain as a silicon-oxygen-silicon bond (-Si-O-Si-). Since the silicon-oxygen-silicon bond is an inorganic bond, the bond energy is large, giving silicone high heat resistance and chemical stability. For example, silicone can be used for a long time below 200°C. Silicone side chains may not be grafted with other groups or may be grafted with an organic group. The organic group grafted can give the silicone good dispersibility, and improve the coating performance of a silicone coating and its affinity with a substrate. The organic silicone particles dispersed in the coating make the separator have good heat resistance, thus improving the thermal safety performance of the secondary battery. In addition, the organic silicone particles can form a structure with voids between them, which in turn can improve the electrolyte infiltration and retention properties of the separator, thereby promoting the transport of active ions in the separator, so that the separator can improve the cycling performance of the secondary battery when applied to the secondary battery.

In some embodiments of this application, the organic silicone particle includes a first polymer, the first polymer including a first structural unit, a second structural unit, and a third structural unit.

The first structural unit has a structure represented by formula (I):

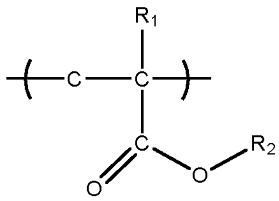

formula (I);

where

in the formula (I), $R_1$ includes one or more of a hydrogen atom or a substituted or unsubstituted C1-C5 alkyl; and optionally, $R_1$ includes one or more of a hydrogen atom or a substituted or unsubstituted C1-C3 alkyl; and $R_2$ includes one or more of a substituted or unsubstituted C1-C20 alkyl, a substituted or unsubstituted C3-C20 cycloalkyl, and a substituted or unsubstituted C1-C20 hydroxyalkyl; and optionally, $R_2$ includes one or more of a C1-C12 alkyl, a C3-C12 cycloalkyl, and a C1-C12 hydroxyalkyl.

The second structural unit is represented by formula (II):

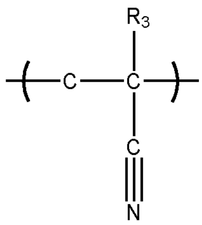

formula (II);

where

in the formula (II), $R_3$ includes one or more of a hydrogen atom or a substituted or unsubstituted C1-C5 alkyl; and optionally, $R_3$ includes one or more of a hydrogen atom or a substituted or unsubstituted C1-C3 alkyl.

The third structural unit is represented by formula (III):

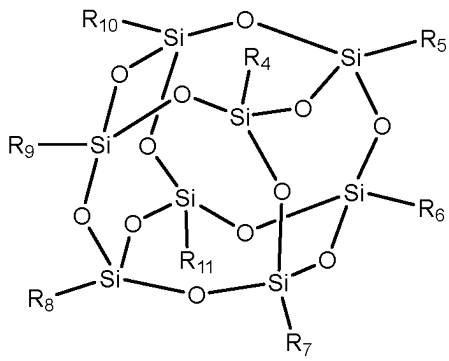

formula (III);

where

In the formula (III), $R_4$ to $R_{11}$ each independently include one or more of a substituted or unsubstituted C1-C10 alkyl or a structural unit represented by formula (III-1), where at least one of $R_4$ to $R_{11}$ is the structural unit represented by formula (III-1),

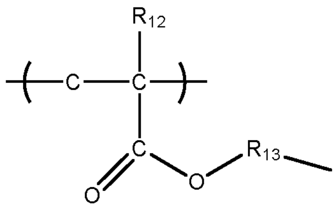
formula (III-1);

where

in the formula (III-1), $R_{12}$ includes one or more of a hydrogen atom or a substituted or unsubstituted C1-C5 alkyl, and optionally, $R_{12}$ includes one or more of a hydrogen atom or a substituted or unsubstituted C1-C3 alkyl; and $R_{13}$ includes a substituted or unsubstituted C1-C10 alkyl, and optionally, $R_{13}$ includes a substituted or unsubstituted C3-C10 alkyl.

In these foregoing embodiments, the first structural unit can adjust the glass transition temperature of the first polymer, improves the toughness and peeling strength of the polymer, and contributes to good bonding. The second structural unit is capable of producing excellent swelling resistance and high cohesiveness, and thus when the first polymer is applied to the separator, the first polymer is in contact with the electrolyte, and the first polymer is not prone to swelling and features good swelling resistance. The third structural unit contains a framework structure consisting of Si-O-Si or Si-O bonds. This can give the first polymer advantages in heat resistance and mechanical properties, which in turn can allow the separator to have good thermal stability during the long-term charge-discharge cycle of the battery, effectively isolating the positive and negative electrode plates and thereby ensuring the thermal safety performance of the battery.

In addition, synergistic effects can be exerted between the first structural unit and the third structural unit to improve the cohesiveness and heat resistance of the first polymer, and synergistic effects can be exerted between the first structural unit and the second structural unit to improve the swelling resistance and the like of the first polymer. Therefore, the first polymer can not only improve the adhesion of the coating to the substrate but also enhance the heat resistance of the separator to improve the thermal safety performance of the battery.

In some embodiments of this application, based on a total molar amount of the first structural unit, the second structural unit, and the third structural unit, a molar amount of the first structural unit is denoted as a%, where $70 \leq a \leq 90$. With the molar amount of the first structural unit being within the foregoing range, the cohesiveness of the first polymer can be significantly improved; and when the first polymer is applied to the separator, the bonding force between the first polymer and the substrate of the separator can be improved. Optionally, $75 \leq a \leq 85$. For example, the molar amount of the first structural unit may be 70%, 75%, 80%, 85%, 90%, or a range defined by any two of the foregoing values.

In some embodiments of this application, based on the total molar amount of the first structural unit, the second structural unit, and the third structural unit, a molar amount of the second structural unit is denoted as b%, where $0 < b \leq 18$. With the molar amount of the second structural unit being within the foregoing range, the swelling resistance of the first polymer can be significantly improved. Optionally, $2 < b \leq 8$. For example, the molar amount of the second structural unit may be 5%, 8%, 10%, 12%, 15%, 18%, or a range defined by any two of the foregoing values.

In some embodiments of this application, based on the total molar amount of the first structural unit, the second structural unit, and the third structural unit, a molar amount of the third structural unit is denoted as c%, where $0 < c \leq 15$. With the molar amount of the third structural unit being within the foregoing range, the heat resistance of the first polymer can be improved. Optionally, $4 \leq c \leq 10$. For example, the molar amount of the third structural unit may be 5%, 8%, 10%, 12%, 15%, or a range defined by any two of the foregoing values.

The first structural unit in the first polymer can give the first polymer good cohesiveness. However, when applied to the separator, the first polymer inevitably comes into contact with the electrolyte. The swelling effect of the electrolyte can degrade the cohesiveness of the first polymer to some extent, while cyano groups contained in the second structural unit of the first polymer can work synergistically with the first structural unit to improve the swelling resistance and cohesiveness of the first polymer. Therefore, when the molar amount a of the first structural unit and the molar amount b of the second structural unit satisfy: $5 \leq a/b \leq 10$, the first structural unit can more fully exert a synergistic effect with the second structural unit to improve the cohesiveness and swelling resistance of the first polymer. For example, a/b may be 5, 6, 7, 8, or a range defined by any two of the foregoing values.

The first structural unit in the first polymer gives the first polymer good cohesiveness, but its own heat resistance is relatively poor. When the first polymer is applied to the separator, as the battery charging and discharging time grows, the temperature inside the battery rises, which may result in the destruction of the first structural unit. Whereas the first polymer further includes a third structural unit, the inorganic structure of polysilsesquioxane in the third structural unit can work synergistically with the first structural unit to improve the overall heat resistance and cohesiveness of the first polymer. Therefore, when the molar amount a of the first structural unit and the molar amount c of the third structural unit satisfy: $6 \leq a/c \leq 15$, the first structural unit can more fully exert a synergistic effect with the third structural unit to improve the cohesiveness and heat resistance of the first polymer. For example, a/c may be 6, 7, 8, 9, 10, 11, 12, 13, 14, 15, or a range

defined by any two of the foregoing values.

In some embodiments of this application, a polymerization degree a of the first structural unit, a polymerization degree b of the second structural unit, and a polymerization degree c of the third structural unit satisfy: a:b:c= (14-16):(3-4):(1-4). When the polymerization degrees of the first structural unit, the second structural unit, and the third structural unit satisfy the foregoing ratio, the three structural units in the organic silicone particles can synergize with each other on the basis of exerting their respective performances advantages, and the three structural units can work together to improve the cohesiveness, thermal stability, and swelling resistance of the polymer.

The first structural unit includes a variety of chemical structures. Specific chemical structures of the first structural unit are described next.

In some embodiments of this application, $R_1$ includes a hydrogen atom and/or a methyl.

In some embodiments of this application, $R_2$ includes one or more of methyl, ethyl, n-propyl, isopropyl, n-butyl, sec-butyl, tert-butyl, n-pentyl, n-octyl, isooctyl, 2-ethylhexyl, dodecyl, or isobornyl.

For example, the first structural unit includes one or more of the structures represented by formula (I-1) to formula (I-8):

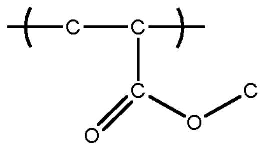 formula (I-1),

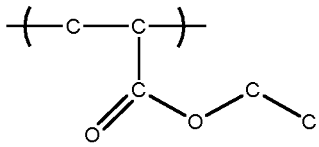 formula (I-2),

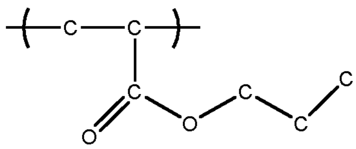 formula (I-3),

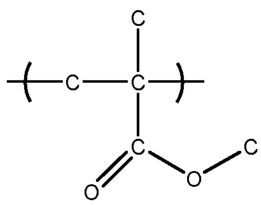 formula (I-4),

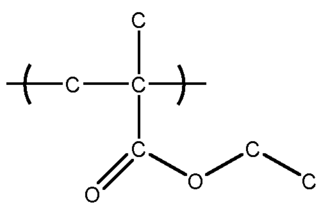 formula (I-5),

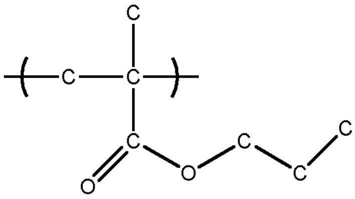 formula (I-6),

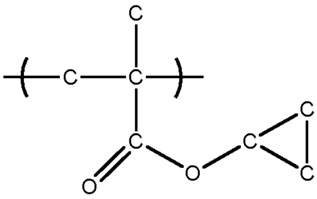 formula (I-7),

and

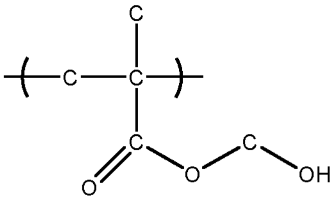 formula (I-8).

The second structural unit includes a variety of chemical structures. Specific chemical structures of the second structural unit are described next.

In some embodiments of this application, $R_3$ includes a hydrogen atom and/or a methyl.

For example, the second structural unit includes one or more of the structures represented by formula (II-1) to formula (II-4):

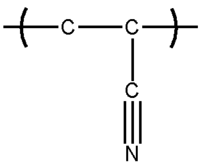 formula (II-1), 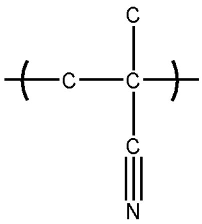 formula (II-2),

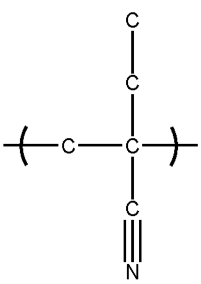 formula (II-3), and 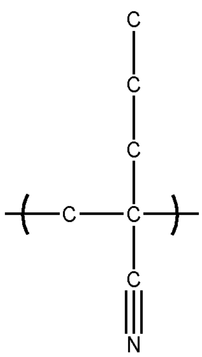 formula (II-4).

The third structural unit includes a variety of chemical structures. Specific chemical structures of the third structural unit are described next.

In some embodiments of this application, $R_4$ to $R_{11}$ each include the structural unit represented by formula (III-1); optionally, $R_{12}$ includes one or more of a hydrogen atom, methyl, ethyl, n-propyl, isopropyl n-butyl, sec-butyl, tert-butyl, or

n-pentyl; and/or $R_{13}$ includes one or more of n-propyl, isopropyl, n-butyl, sec-butyl, tert-butyl, n-pentyl, n-octyl, isooctyl, or 2-ethylhexyl.

In this application, types of groups in the first polymer can be determined using infrared spectroscopy. For example, infrared spectrum of a material can be measured to identify its characteristic peaks, thereby determining types of modified groups. Specifically, an infrared spectrum analysis can be performed on the material by using an instrument and method well-known in the art. For example, an infrared spectrometer (for example, an IS10 Fourier transform infrared spectrometer from Nicolet (nicolet) Company of the USA) is used for the measurement with reference to the GB/T 6040-2019 General rules for infrared analysis.

In some embodiments of this application, the infrared spectrum of the first polymer has characteristic peaks from 1750 $cm^{-1}$ to 1735 $cm^{-1}$, indicating the presence of ester groups.

In some embodiments of this application, the infrared spectrum of the first polymer has characteristic peaks from 2260 $cm^{-1}$ to 2220 $cm^{-1}$, indicating the presence of cyano groups.

In some embodiments of this application, the infrared spectrum of the first polymer has characteristic peaks from 1100 $m^{-1}$ to 1120 $cm^{-1}$, indicating the presence of a Si-O-Si framework in silsesquioxane.

In some embodiments of this application, the first polymer can be prepared using the following method. The method includes the following steps:

Step S100: Provide a first monomer, a second monomer, and a third monomer; and

Step S200: Mix the first monomer, the second monomer, and the third monomer, and undergo polymerization reactions under the action of an initiator to generate a first polymer.

In this application, the first monomer, the second monomer, and the third monomer are mixed and then copolymerized, and the first polymer formed is a copolymer of the three monomers.

The first monomer has a structure represented by formula (IV),

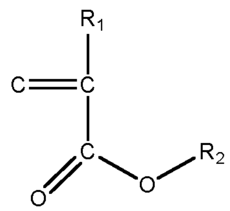
formula (IV);

where

in the formula (IV), $R_1$ is selected from a hydrogen atom or a substituted or unsubstituted C1-C5 alkyl; and optionally, $R_1$ is selected from a hydrogen atom or a substituted or unsubstituted C1-C3 alkyl; and

$R_2$ is selected from a substituted or unsubstituted C1-C20 alkyl, a substituted or unsubstituted C3-C20 cycloalkyl, and a substituted or unsubstituted C1-C20 hydroxyalkyl; and optionally, $R_2$ is selected from a C1-C12 alkyl, a C3-C12 cycloalkyl, and a C1-C12 hydroxyalkyl.

The first monomer is an acrylate compound, and during its polymerization, the carbon-carbon double bond opens up to form the first structural unit.

For example, the first monomer includes one or more of methyl acrylate, ethyl acrylate, n-propyl acrylate, isopropyl acrylate, n-butyl acrylate, isobutyl acrylate, sec-butyl acrylate, tert-butyl acrylate, n-pentyl acrylate, n-octyl acrylate, isooctyl acrylate, 2-ethylhexyl acrylate, cyclohexyl acrylate, lauryl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

The second monomer has a structure represented by formula (V),

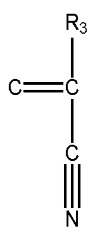
formula (V);

where
in the formula (V), $R_3$ includes one or more of a hydrogen atom or a substituted or unsubstituted C1-C5 alkyl; and optionally, $R_3$ includes one or more of a hydrogen atom or a substituted or unsubstituted C1-C3 alkyl.

The second monomer is an acrylonitrile compound, and during its polymerization, the carbon-carbon double bond opens up to form the second structural unit.

For example, the second monomer includes acrylonitrile and/or methacrylonitrile.

The third monomer has a structure represented by formula (VI),

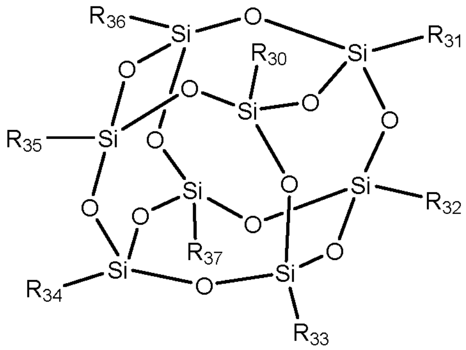
formula (VI);

where
in the formula (VI), $R_{30}$ to $R_{37}$ each independently include one or more of a substituted or unsubstituted C1-C10 alkyl or a structural unit represented by formula (VI-1), where at least one of $R_{30}$ to $R_{37}$ is the structural unit represented by formula (VI-1),

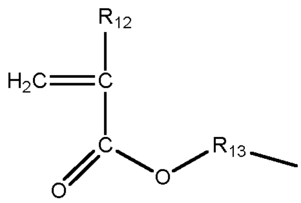
formula (VI-1);

where

in the formula (VI-1), $R_{12}$ includes one or more of a hydrogen atom or a substituted or unsubstituted C1-C5 alkyl; and optionally, $R_{12}$ includes one or more of a hydrogen atom or a substituted or unsubstituted C1-C3 alkyl; and
$R_{13}$ includes a substituted or unsubstituted C1-C10 alkyl; and optionally, $R_{13}$ includes a substituted or unsubstituted C3-C10 alkyl.

For example, the third monomer includes one or more of methacryloxypropyl cage polysilsesquioxane, methacryloxypropyl heptaisobutylpolysilsesquioxane, methacryloxypropyl heptaoctylpolysilsesquioxane, acryloxypropyl cage polysilsesquioxane, acryloxypropyl heptaisobutylpolysilsesquioxane, and methacryloxypropyl heptaoctylpolysilsesquioxane.

In some embodiments of this application, step S200 specifically includes the following steps:

Step S210: Add the first monomer, the second monomer, and the third monomer to a solvent and an emulsifier and mix them to form a mixed system; and
Step S220: Add an initiator to the mixed system, and undergo polymerization reactions under the action of the initiator to generate a first polymer.

In this application, copolymerization of multiple monomers can be carried out through emulsion polymerization, providing a simpler polymerization method. Certainly, other polymerization means can alternatively be used in this application, such as solution polymerization and suspension polymerization. Process parameters used in a polymerization process can be selected from parameters commonly used in the art, and details are not described herein.

In some embodiments of this application, the emulsifier includes one or more of sodium dodecyl sulfate, sodium dodecyl benzene sulfonate, alkyl diphenyl oxide disulfonate, and ethoxylated alkyl phenol ammonium sulfate.

In some embodiments of this application, based on a total mass of the mixed system, a ratio of a mass percentage of the emulsifier to a mass percentage of the first monomer, second monomer, and third monomer is 0.1% to 5%, which means that an amount of the emulsifier is 0.1% to 5% of a mass of the three monomers. With the mass percentage of the emulsifier being within the foregoing range, the first monomer, second monomer, and third monomer can be emulsified and dispersed in the solvent to form a more homogeneous system.

In some embodiments of this application, the initiator includes potassium persulfate and/or ammonium persulfate.

In some embodiments of this application, based on a total mass of the mixed system, a ratio of a mass percentage of the initiator to the mass percentage of the second monomer, second monomer, and third monomer is 0.15% to 1%, which means that an amount of the initiator is 0.1% to 5% of the mass of the three monomers. With the mass percentage of the initiator being within the foregoing range, adequate polymerization can be ensured.

In some embodiments of this application, the solvent may include water, such as deionized water.

In a specific example, the method includes:

preparation of prepolymer: mixing deionized water, an emulsifier, a first polymerizable monomer, a second polymerizable monomer, and a third polymerizable monomer, and stirring them well to obtain a prepolymer; and
preparation of first polymer: adding the emulsifier and deionized water to a container, and stirring them for 30 minutes to 60 minutes to emulsify to obtain a uniform and stable emulsion; then separately and slowly adding the prepolymer prepared in the previous step and an initiator solution (a solution formed by dissolving the initiator potassium persulfate and/or ammonium persulfate in deionized water) in a dropwise way; and after the dropwise addition is complete, raising the temperature to 90-110°C and keeping at that temperature for 0.5 h in reaction, then cooling down to 40°C, and adjusting the pH to 7-8 with ammonia water, followed by filtering, discharging, and a drying process to obtain a polymer.

In some embodiments of this application, the organic silicone particles further include a second polymer, the second polymer including a structural unit represented by formula (a):

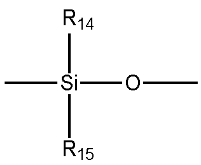 formula (a);

where
in the formula (a), $R_{14}$ and $R_{15}$ are each independently selected from a substituted or unsubstituted C1-C10 alkyl, hydroxyl, or amino. Optionally, $R_{14}$ and $R_{15}$ are each independently selected from a substituted or unsubstituted C1-C6 alkyl, hydroxyl, or amino.

For example, the organic silicone particles include at least one of the structures represented by formula (a-1) to the structure represented by formula (a-5):

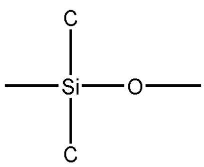 formula (a-1), 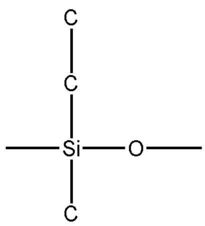 formula (a-2),

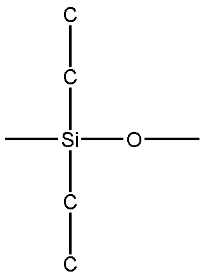 formula (a-3), 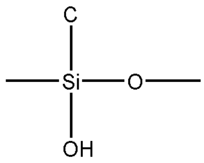 formula (a-4),

and

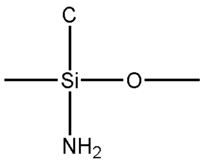 formula (a-5).

The first polymer and the second polymer in this application are only used to distinguish the types of materials and have no limitation on order or quantity.

In some embodiments of this application, a number average molecular weight of the organic silicone particles is 25,000 to 60,000, optionally 30,000 to 50,000. For example, the number average molecular weight of the organic silicone particles may be 25,000, 30,000, 35,000, 40,000, 45,000, 50,000, 55,000, 60,000, or a range defined by any two of the foregoing values. With the number average molecular weight of the organic silicone particles being within the foregoing range, the organic silicone particles have a relatively high viscosity, which is conducive to improving the adhesion between the separator and the positive and negative electrode plates when the organic silicone particles are applied to the separator. The number average molecular weight of the organic silicone particles being within the foregoing range is conducive to forming organic silicone particles with a small particle size, and such organic silicone particles, when applied to the separator, allow for a lightweight and thin coating on the separator to reduce the overall thickness of the separator, thereby facilitating an increase in energy density of the secondary battery. Moreover, the particle size of the organic silicone particles formed by the organic silicone particles is not too small, which can reduce the risk of organic silicone particles blocking the substrate in the separator and improve the overall air permeability of the separator and the like.

In this application, a number average molecular weight of the first polymer may be measured using a gel permeation chromatogrphy (GPC) method. Specifically, the GPC1515 instrument of Waters Company in the USA is used for testing. A sample is dissolved in tetrahydrofuran for more than 12 hours with a sample concentration of 4 mg/ml, followed by filtering and sampling. The test is performed at a temperature of 25°C and a test flow rate of 1 ml/min.

The inventors have found through further research that during long-term charge and discharge cycles of the battery, water in the separator is gradually released and enters into the electrolyte, while the electrolyte has a high sensitivity to water and is prone to producing hydrofluoric acid HF when exposed to water, which increases the acidity of the electrolyte and leads to corrosion of active materials and current collectors, and may result in the leaching of transition metal ions in the active material, thus affecting the electrochemical performance of the battery. Therefore, in this application, the moisture content of the organic silicone particles is adjusted to be less than or equal to 3000 μg/g, optionally 700 μg/g to 2500 μg/g, based on a mass of the organic silicone particles. With the moisture content of the organic silicone particles being within the foregoing range, the moisture content contained therein is relatively small, which can reduce the risk of side reactions in the electrolyte during the long-term charge and discharge cycles of the battery, thereby improving the electrochemical performance of the battery. For example, the moisture content of the organic silicone particles may be 700 μg/g, 800 μg/g, 1000 μg/g, 1200 μg/g, 1500 μg/g, 1800 μg/g, 2000 μg/g, 2500 μg/g, 3000 μg/g, or a range defined by any two of the foregoing values.

In this application, the moisture content of the organic silicone particles can be measured by a moisture meter. The Karl Fischer moisture titration method can be used for moisture content determination, and the Metrohm 831 KF Coulometer, a Swiss-made Karl Fischer moisture titrator can be used as the testing instrument.

In some embodiments of this application, a particle size by volume $D_v90$ of the organic silicone particles satisfies: $D_V90 \leq 2.0$ μm. The particle size by volume $D_v90$ of the organic silicone particles being set within the foregoing suitable range can increase the packing density thereof and also enable the coating to have a suitable thickness to increase the energy density of the battery.

In some other embodiments of this application, a particle size by volume $D_v90$ of the organic silicone particles satisfies: 0.5 μm$\leq D_V90 \leq$1.5 μm.

In some examples, the particle size by volume $D_V90$ of the organic silicone particles may be but is not limited to 0.5 μm, 0.6 μm, 0.7 μm, 0.8 μm, 0.9 μm, 1.0 μm, 1.1 μm, 1.2 μm, 1.3 μm, 1.4 μm, 1.5 μm, 1.6 μm, 1.7 μm, 1.8 μm, 1.9 μm, 2.0 μm, or a range defined by any two of the foregoing values.

In some other embodiments of this application, a particle size by volume $D_v50$ of the organic silicone particles satisfies: $1.0\ \mu m \leq D_V50 \leq 2.5\ \mu m$.

In some embodiments of this application, the particle size distribution of the organic silicone particles satisfies: $0.5 \leq (D_V90-D_V10)/D_V50 \leq 1.5$.

In this application, the particle size by volume $D_v90$ of the material has a meaning well-known in the art, represents a particle size corresponding to a cumulative volume distribution percentage of the material reaching 90%, and can be measured using an instrument and method known in the art. For example, the measurement can be carried out using a laser particle size analyzer (for example, Master Size 3000) with reference to GB/T 19077-2016 Particle size distribution laser diffraction method.

In this application, the particle size by volume $D_v50$ of the material has a meaning well-known in the art, represents a particle size corresponding to a cumulative volume distribution percentage of the material reaching 50%, and can be measured using an instrument and method known in the art. For example, the measurement can be carried out using a laser particle size analyzer (for example, Master Size 3000) with reference to GB/T 19077-2016 Particle size distribution laser diffraction method.

In this application, the particle size by volume $D_v10$ of the material has a meaning well-known in the art, represents a particle size corresponding to a cumulative volume distribution percentage of the material reaching 10%, and can be measured using an instrument and method known in the art. For example, the measurement can be carried out using a laser particle size analyzer (for example, Master Size 3000) with reference to GB/T 19077-2016 Particle size distribution laser diffraction method.

In some embodiments of this application, a specific surface area of the organic silicone particles is less than or equal to 35 $m^2/g$, optionally 5 $m^2/g$ to 30 $m^2/g$. The specific surface area of the organic silicone particles being set within the foregoing suitable range can increase the contact area between the organic silicone particles and the electrolyte, thereby helping to improve the electrolyte infiltration and retention effects in the separator.

In this application, specific surface area has a meaning well-known in the art and can be measured using an instrument and method known in the art. For example, the specific surface area can be measured using a nitrogen adsorption specific surface area analysis test method with reference to the GB/T 19587-2017 and calculated using a BET (Brunauer Emmett Teller) method. Optionally, the nitrogen adsorption specific surface area analysis test may be performed using the Tri-Star 3020 specific surface area and pore size analyzer from Micromeritics Company in USA.

In some examples, the specific surface area of the organic silicone particles may be but is not limited to 3 $m^2/g$, 3.5 $m^2/g$, 4 $m^2/g$, 4.5 $m^2/g$, 5 $m^2/g$, 5.5 $m^2/g$, 6 $m^2/g$, 6.5 $m^2/g$, 7 $m^2/g$, 7.5 $m^2/g$, 8 $m^2/g$, 8.5 $m^2/g$, 9 $m^2/g$, 9.5 $m^2/g$, 10 $m^2/g$, 10.5 $m^2/g$, 11 $m^2/g$, 11.5 $m^2/g$, 12 $m^2/g$, 12.5 $m^2/g$, 13 $m^2/g$, 13.5 $m^2/g$, 14 $m^2/g$, 14.5 $m^2/g$, 15 $m^2/g$, 15.5 $m^2/g$, 16 $m^2/g$, 16.5 $m^2/g$, 17 $m^2/g$, 17.5 $m^2/g$, 18 $m^2/g$, 19 $m^2/g$, 20 $m^2/g$, 21 $m^2/g$, 22 $m^2/g$, 23 $m^2/g$, 24 $m^2/g$, 25 $m^2/g$, 26 $m^2/g$, 27 $m^2/g$, 28 $m^2/g$, 29 $m^2/g$, 30 $m^2/g$, 31 $m^2/g$, 32 $m^2/g$, 33 $m^2/g$, 34 $m^2/g$, 35 $m^2/g$, or a range defined by any two of the foregoing values.

In some embodiment of this application, a thickness of the substrate is less than or equal to 12 μm. Optionally, the thickness of the substrate is 3 μm to 8 μm. The coating in this application can improve the thermal safety performance and cycling performance of the separator, allowing for the use of a thinner substrate and thereby helping to further increase the energy density of the battery.

In some embodiments of this application, the substrate has a porous structure, and a porosity of the substrate is greater than or equal to 20%. Optionally, the porosity of the substrate is 25% to 45%. The porous substrate with a porosity being within the foregoing suitable range is conducive to further improving the ion transport property of the separator to improve the cycling performance of the battery.

There is no particular limitation on the material of the substrate in this application, and any commonly known substrates with good chemical stability and mechanical stability can be selected. For example, the substrate may include at least one of a porous polyolefin-based resin film (for example, at least one of polyethylene, polypropylene, and polyvinylidene fluoride), a porous glass fiber, and a porous nonwoven fabric. The porous substrate may be a single-layer film or a multilayer composite film. When the porous substrate is a multilayer composite film, each layer may be made of a same material or different materials.

In some embodiments of this application, a machine-direction thermal shrinkage rate of the separator at 150°C for 1 hour is less than or equal to 3%.

In some embodiments of this application, a transverse-direction thermal shrinkage rate of the separator at 150°C for 1 hour is less than or equal to 2%.

In the foregoing embodiments, the separator of this application has a low thermal shrinkage rate in both the transverse and machine directions, thereby further improving the thermal safety performance of the battery.

In some embodiments of this application, an air permeability of the separator is less than or equal to 200 s/100mL. Optionally, the air permeability of the separator is 150 s/100mL to 200 s/100mL. The separator of this application features

good air permeability, thereby improving ion transport properties and reducing the resistance of the battery to improve the cycling performance of the battery.

In some embodiments of this application, a machine-direction tensile strength of the separator is greater than or equal to 2700 $kgf/cm^2$.

In some embodiments of this application, a transverse-direction tensile strength of the separator is greater than or equal to 2500 $kgf/cm^2$.

In the foregoing embodiments, the separator of this application has high tensile strength in both the transverse and machine directions, so that the probability of separator breakage during battery swelling is low, thereby further improving the safety performance of the battery.

In this application, the thermal shrinkage rate, tensile strength, and air permeability of the separator all have a meaning well-known in the art and can be measured using methods known in the art. For example, all of them may be measured with reference to GB/T 36363-2018.

It should be noted that the foregoing parameters of the coating of the separator are all parameters for a coating on a single side of the substrate.

When the coating is provided on two sides of the substrate, parameters for a coating on either side that satisfy this application are considered to fall within the protection scope of this application.

**Preparation method of separator**

A second aspect of this application provides a preparation method of the separator according to the first aspect of this application, including the following steps: S1. providing a substrate; S2. mixing granular organic materials in a solvent to prepare a coating slurry; and S3. applying the coating slurry to at least one side of the substrate to form a slurry film layer and forming a coating by drying the slurry film layer, to obtain a separator; where a weight per unit area of the coating for a single side is denoted as M, a thickness of the coating for a single side is denoted as H, and a true density of the organic materials is denoted as $\rho_{organic}$, the separator then satisfies: $M/(H \times \rho_{organic}) \geq 0.4$, where M is in unit of $g/m^2$, H is in unit of $\mu m$, and $\rho_{organic}$ is in unit of $g/cm^3$.

In some embodiments of this application, in S2, the solvent may be water, such as deionized water. The binder may be a water-soluble binder with advantages of good thermodynamic stability and environmental friendliness, which is conducive to the preparation and application of the coating slurry. In an example, the water-soluble binder may include at least one of aqueous acrylic resins (for example, acrylic acid, methacrylic acid, sodium acrylate monomer homopolymers, or copolymers with other comonomers), polyvinyl alcohol (PVA), isobutylene maleic anhydride copolymer, and polyacrylamide. In addition, the coating slurry may also include other components, such as dispersants and wetting agents.

In some embodiments of this application, in S3, the coating is performed using a coater. In this application, a model of the coater is not specially limited. For example, a commercially available coater can be used. Optionally, the coater includes a gravure roller, and the gravure roller is used for transferring the coating slurry to the substrate. Optionally, the number of lines of the gravure roller is 100 LPI to 200 LPI, more optionally 150 LPI to 180 LPI. In addition, the coating method can be transfer coating, rotary spraying, dip coating, and the like.

In some embodiments of this application, in S3, a speed of the coating may be controlled within 30 m/min to 120 m/min, for example, 60 m/min to 90 m/min. When the speed of the coating is within the foregoing range, the problem related to the film surface of the coating can be effectively alleviated and the probability of the uneven coating can be reduced, thereby further improving the energy density and safety performance of the battery.

Controlling the foregoing process parameters within the given ranges can further improve the performance of the separator of this application. Those skilled in the art can selectively adjust one or more of the foregoing process parameters according to actual production.

In the preparation method of separator of this application, the coating is produced through one-step coating, which greatly simplifies the production process of the separator.

For some raw materials and their percentages and other parameters used in the preparation method of separator of this application, reference can be made to the separator according to the first aspect of embodiments of this application, and details are not be repeated herein. Unless otherwise specified, raw materials used in the preparation method of separator of this application are all commercially available.

**Secondary battery**

A third aspect of embodiments of this application provides a secondary battery. The secondary battery, also referred to as a rechargeable battery or a storage battery, is a battery that is reusable through activation of an active material in the battery by charging the battery that has been discharged. Generally, the secondary battery includes an electrode assembly and an electrolyte. The electrode assembly includes a positive electrode plate, a negative electrode plate, and a separator. The separator is disposed between the positive electrode plate and the negative electrode plate,

mainly to prevent short circuit between the positive electrode and the negative electrode and allow lithium ions to pass through.

The secondary battery is not particularly limited in type in this application. For example, the secondary battery may be a lithium-ion battery, a sodium-ion battery, or the like. In particular, the secondary battery may be a lithium-ion secondary battery.

The secondary battery of this application includes the separator according to the first aspect of this application or a separator obtained using the preparation method according to the second aspect of this application. The separator is sandwiched between a positive electrode plate and a negative electrode plate. Optionally, at least a side of the separator close to the negative electrode plate is provided with the coating of this application. Therefore, the secondary battery of this application features good thermal safety performance and cycling performance.

[Positive electrode plate]

In some embodiments of this application, a positive electrode plate includes a positive electrode current collector and a positive electrode film layer disposed on at least one side of the positive electrode current collector and including a positive electrode active material. For example, the positive electrode current collector has two opposite sides in its thickness direction, and the positive electrode film layer is provided on either or both of two opposite surfaces of the positive electrode current collector.

When the secondary battery of this application is a lithium-ion secondary battery, the positive electrode active material may include but is not limited to at least one of lithium-containing transition metal oxides, lithium-containing phosphates, and their respective modified compounds. Examples of the lithium transition metal oxides may include but are not limited to at least one of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, and their respective modified compounds. Examples of the lithium-containing phosphates may include but are not limited to at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

In some embodiment of this application, to further increase the energy density of the secondary battery, the positive electrode active material for the lithium-ion secondary battery may include at least one of lithium transition metal oxides with a general formula $Li_aNi_bCo_cM_aO_eA_f$ and their modified compounds, where $0.8 \leq a \leq 1.2$, $0.5 \leq b < 1$, $0 < c < 1$, $0 < d < 1$, $1 \leq e \leq 2$, $0 \leq f \leq 1$, M is selected from at least one of Mn, Al, Zr, Zn, Cu, Cr, Mg, Fe, V, Ti, and B, and A is selected from at least one of N, F, S, and Cl.

In an example, the positive electrode active material for the lithium-ion secondary battery may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

When the secondary battery of this application is a sodium-ion secondary battery, the positive electrode active material may include but is not limited to at least one of sodium-containing transition metal oxides, polyanionic materials (phosphate, fluorophosphate, pyrophosphate, sulfate), and Prussian blue materials.

In an example, the positive electrode active material for the sodium-ion secondary battery may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, Prussian blue materials, and materials with a general formula $X_pM'_q(PO_4)_rO_xY_{3-x}$. In the general formula $X_pM'_q(PO_4)_rO_xY_{3-x}$, $0 < p \leq 4$; $0 < q \leq 2$; $1 \leq r \leq 3$; $0 \leq x \leq 2$; X is selected from at least one of $H^+$, $Li^+$, $Na^+$, $K^+$, and $NH_4^+$; M' is a transition metal cation, optionally at least one of V, Ti, Mn, Fe, Co, Ni, Cu, and Zn; and Y is a halogen anion, optionally at least one of F, Cl and Br.

In this application, the modified compounds of the foregoing positive electrode active materials may be obtained by doping modification and/or surface coating modification to the positive electrode active material.

In some embodiments of this application, the positive electrode film layer further optionally includes a positive electrode conductive agent. The positive electrode conductive agent is not particularly limited in type in this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments of this application, based on a total weight of the positive electrode film layer, a mass percentage of the positive electrode conductive agent is ≤6wt%.

In some embodiments of this application, the positive electrode film layer further optionally includes a positive electrode binder. The positive electrode binder is not particularly limited in type in this application. In an example, the positive electrode binder may include at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, tetrafluoroethylene-hexafluoropropylene copolymers, and fluorine-containing acrylic resins. In some

embodiments of this application, based on a total weight of the positive electrode film layer, a mass percentage of the positive electrode binder is ≤5wt%.

In some embodiments of this application, the positive electrode current collector may be a metal foil current collector or a composite current collector. As an example of the metal foil, aluminum foil may be used. The composite current collector may include a polymer material substrate and a metal material layer formed on at least one side of the polymer material substrate. In an example, the metal material may include at least one of aluminum, aluminum alloys, nickel, nickel alloys, titanium, titanium alloys, silver, and silver alloys. In an example, the polymer material substrate may include at least one of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

[Negative electrode plate]

In some embodiments of this application, a negative electrode plate includes a negative electrode current collector and a negative electrode film layer disposed on at least one side of the negative electrode current collector and including a negative electrode active material. For example, the negative electrode current collector has two opposite sides in its thickness direction, and the negative electrode film layer is provided on either or both of two opposite surfaces of the negative electrode current collector.

The negative electrode active material may be a negative electrode active material well-known in the art and used for secondary batteries. In an example, the negative electrode active material includes but is not limited to at least one of natural graphite, artificial graphite, soft carbon, hard carbon, silicon-based materials, tin-based materials, and lithium titanates. The silicon-based material may include at least one of elemental silicon, silicon-oxygen compounds, silicon-carbon composites, silicon-nitrogen composites, and silicon alloys. The tin-based materials may include at least one of elemental tin, tin oxides, and tin alloy materials.

In some embodiments of this application, the negative electrode film layer further optionally includes a negative electrode conductive agent. The negative electrode conductive agent is not particularly limited in type in this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments of this application, based on a total weight of the negative electrode film layer, a mass percentage of the negative electrode conductive agent is ≤7wt%.

In some embodiments of this application, the negative electrode film layer further optionally includes a negative electrode binder. The negative electrode binder is not particularly limited in type in this application. In an example, the negative electrode binder may include at least one styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). In some embodiments of this application, based on a total weight of the negative electrode film layer, a mass percentage of the negative electrode binder is ≤6wt%.

In some embodiments of this application, the negative electrode film layer further optionally includes another adjuvant. For example, the another adjuvant may include a thickener, for example, sodium carboxymethyl cellulose (CMC) or PTC thermistor material. In some embodiments of this application, based on a total weight of the negative electrode film layer, a mass percentage of the another adjuvant is ≤3wt%.

In some embodiments of this application, the negative electrode current collector may be a metal foil current collector or a composite current collector. As an example of the metal foil, copper foil may be used. The composite current collector may include a polymer material substrate and a metal material layer formed on at least one side of the polymer material substrate. In an example, the metal material may include at least one of copper, copper alloys, nickel, nickel alloys, titanium, titanium alloys, silver, and silver alloys. In an example, the polymer material substrate may include at least one of polypropylene (PP), polyethylene terephthalate (PET), polybutylene terephthalate (PBT), polystyrene (PS), and polyethylene (PE).

The negative electrode film layer is usually formed by applying a negative electrode slurry onto the negative electrode current collector, followed by drying and cold-pressing. The negative electrode slurry is usually formed by dispersing the negative electrode active material, the optional conductive agent, the optional binder, and the optional another adjuvant in a solvent and stirring them evenly. The solvent may be but is not limited to N-methylpyrrolidone (NMP) or deionized water.

The negative electrode plate does not exclude additional functional layers other than the negative electrode film

layer. For example, in some embodiments, the negative electrode plate of this application further includes a conductive primer layer (which is, for example, formed by a conductive agent and a binder) sandwiched between the negative electrode current collector and the negative electrode film layer and disposed on the surface of the negative electrode current collector. In some other embodiments, the negative electrode plate of this application further includes a protection layer covering the surface of the negative electrode film layer.

[Electrolyte]

During charge and discharge of the secondary battery, active ions are intercalated and deintercalated between the positive electrode plate and the negative electrode plate. The electrolyte plays a role of conducting ions between the positive electrode plate and the negative electrode plate. The electrolyte is not particularly limited in type in this application and may be selected according to actual needs.

The electrolyte includes an electrolytic salt and a solvent. The electrolytic salt and solvent are not specifically limited in type and may be selected according to actual needs.

When the secondary battery of this application is a lithium-ion secondary battery, in an example, the electrolytic salt may include but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro(dioxalato)phosphate (LiDFOP), and lithium tetrafluoro oxalato phosphate (LiTFOP).

When the secondary battery of this application is a sodium-ion secondary battery, in an example, the electrolytic salt may include but is not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonyl imide (NaFSI), bistrifluoromethanesulfonyl sodium imide (NaTFSI), sodium trifluoromethanesulfonate (NaTFS), sodium difluoroborate (NaDFOB), sodium bis(oxalato)borate (NaBOB), sodium difluorophosphate ($NaPO_2F_2$), sodium difluorodioxalophosphate (NaDFOP), and sodium tetrafluoroxalate phosphate (NaTFOP).

In an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments of this application, the electrolyte further optionally includes an additive. For example, the additive may include a negative electrode film-forming additive, or may include a positive electrode film-forming additive, or may include an additive capable of improving some performance of the secondary battery, for example, an additive for improving overcharge performance of the secondary battery, an additive for improving high-temperature performance of the secondary battery, or an additive for improving low-temperature performance of the secondary battery.

In some embodiments of this application, the positive electrode plate, the separator, and the negative electrode plate may be made into an electrode assembly through winding and/or lamination.

In some embodiments of this application, the secondary battery may further include an outer package. The outer package may be used for packaging the electrode assembly and the electrolyte.

In some embodiments of this application, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, for example, at least one of polypropylene (PP), polybutylene terephthalate (PBT), and polybutylene succinate (PBS).

The secondary battery is not particularly limited in shape in this application and may be cylindrical, rectangular, or any other shape. FIG. 1 shows a secondary battery 5 of a rectangular structure as an example.

In some embodiments of this application, as shown in FIG. 2, the outer package may include a housing 51 and a cover plate 53. The housing 51 may include a base plate and a side plate connected onto the base plate, and the base plate and the side plate are enclosed to form an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding and/or lamination. The electrode assembly 52 is packaged in the accommodating cavity. The electrolyte solution infiltrates the electrode assembly 52. The secondary battery 5 may include one or more electrode assemblies 52 whose quantity is adjustable as required.

The preparation method of secondary battery of this application is well known. In some embodiments of this application, the positive electrode plate, the separator, the negative electrode plate, and the electrolyte may be assembled to form a secondary battery. For example, the positive electrode plate, the separator, and the negative electrode plate may

be made into an electrode assembly through winding and/or lamination; and the electrode assembly is put in an outer package, followed by drying, and the electrolyte is injected, followed by processes such as vacuum packaging, standing, formation, and shaping, to obtain a secondary battery.

In some embodiments of this application, such secondary batteries of this application may be assembled into a battery module. The battery module may include a plurality of secondary batteries whose quantity may be adjusted based on application and capacity of the battery module.

FIG. 3 is a schematic diagram of a battery module as an example. As shown in FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fastened by using fasteners.

Optionally, the battery module 4 may further include a shell with an accommodating space, and the plurality of secondary batteries 5 are accommodated in the accommodating space.

In some embodiments of this application, the battery module may be further assembled into a battery pack, and a quantity of battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

## Electric apparatus

A fourth aspect of embodiments of this application provides an electric apparatus. The electric apparatus includes at least one of the secondary battery according to the third aspect of this application, a battery module, and a secondary battery pack. The secondary battery, battery module, or battery pack may be used as a power source for the electric apparatus or an energy storage unit of the electric apparatus. The electric apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

FIG. 6 is a schematic diagram of an electric apparatus as an example. This electric apparatus is a battery electric vehicle, a hybrid electric vehicle, a plug-in hybrid electric vehicle, or the like. To satisfy a requirement of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as its power source.

Content disclosed in this application is described in more detail in the following examples. These examples are merely intended for illustrative purposes because various modifications and changes made without departing from the scope of the content disclosed in this application are apparent to a person skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

## Example 1

Preparation of organic silicone particles

Preparation of prepolymer: adding 300g of deionized water and 1.5 g of sodium dodecyl sulfate into a 5L three-necked bottle, stirring them at 1500 r/min for 30 minutes to emulsify to obtain a uniform and stable emulsion, and then adding 137.74 g of methyl acrylate, 15.9 g of acrylonitrile, and 66.35 g of methacryloxypropyl cage polysilsesquioxane in turn (with a ratio of molar amounts of methyl acrylate, acrylonitrile, and methacryloxypropyl cage polysilsesquioxane being 16:3: 1), and keeping stirring at 1500 r/min for 30 minutes to obtain a uniform prepolymer.

Preparation of organic silicone particles: adding 0.6 g of sodium dodecyl sulfate and 200 g of deionized water into a dried three-necked bottle, and stirring at a high speed for 30 minutes to emulsify to obtain a uniform and stable emulsion; then using a peristaltic pump to separately and slowly add the prepolymer prepared in the previous step and an initiator solution (a solution formed by dissolving 0.6 g of potassium persulfate in 10 g of deionized water) in a dropwise way; and

after the dropwise addition is complete, raising the temperature to 90°C and keeping at that temperature for 0.5 h in reaction, then cooling down to 40°C, and adjusting the pH to 7-8 with ammonia water, followed by filtering, discharging, and a drying process to produce organic silicone particles with a number average molecular weight of 25473 and record them as O1. O1 has a moisture content of 1000 μg/g, a particle size by volume $D_V90$ of 1.5 μm, a particle size by volume $D_v50$ of 1.2 μm, a particle size by volume $D_V10$ of 0.4 μm, and a specific surface area of 20 $m^2/g$.

Preparation of separator

Provision of a PE substrate with a thickness of 6 μm and a porosity of 30%.

Preparation of coating slurry: mixing the organic silicone particles O1 and polyvinyl alcohol based on a proportion (a mass ratio of 8:2) in water to prepare a coating slurry.

Application of coating: applying the coating slurry prepared on two sides of the PE substrate using a coater, followed by processes such as drying and slitting, to obtain a separator.

Preparation of positive electrode plate

Active substance $LiNi_{0.5}Co_{0.2}Mn_{0.3}O_2$ (NCM523), conductive agent acetylene black, and binder polyvinylidene fluoride at a weight ratio of 94:3:3 were mixed well in a proper amount of solvent N-methylpyrrolidone (NMP), to obtain a positive electrode slurry. The positive electrode slurry was applied on a positive electrode current collector aluminum foil, followed by processes such as drying, cold pressing, slitting, and cutting, to obtain a positive electrode plate.

Preparation of negative electrode plate

Negative electrode active material artificial graphite, conductive agent carbon black (Super P), binder butadiene styrene rubber (SBR), and sodium carboxymethyl cellulose (CMC-Na) at a mass ratio of 95:2:2:1 were mixed well in a proper amount of solvent deionized water to obtain a negative electrode slurry. The negative electrode slurry was applied on a negative electrode current collector copper foil, followed by processes such as drying, cold pressing, slitting, and cutting, to obtain a negative electrode plate.

Preparation of electrolyte

Ethylene carbonate (EC) and ethyl methyl carbonate (EMC) at a mass ratio of 30:70 were mixed to obtain an organic solvent. Fully dried $LiPF_6$ was dissolved in the organic solvent to prepare an electrolyte with a concentration of 1 mol/L.

Preparation of battery cell

The positive electrode plate, the separator, and the negative electrode plate were stacked in order and wound to obtain an electrode assembly. The electrode assembly was put into an outer package; and after drying, the electrolyte was injected thereto, followed by processes such as vacuum packaging, standing, formation, and shaping, to obtain a battery cell.

**Examples 2 to 12**

The battery cell was prepared using a method similar to that in Example 1, except for the relevant parameters of the coating of the separator, where the type of organic silicone particles in Example 10 is different from that in other examples. Detailed parameters are given in Table 1.

In Example 10, the preparation method of organic silicone particles is as follows.

Preparation of prepolymer: adding 1400 g of deionized water and 7 g of sodium dodecyl sulfate into a 5L three-necked bottle, stirring them at 1500 r/min for 30 minutes to emulsify to obtain a uniform and stable emulsion, and then adding 645.68 g of methyl acrylate, 75.59 g of acrylonitrile, and 663.50 g of methacryloxypropyl cage polysilsesquioxane in turn (with a ratio 15:3:2 of molar amounts of methyl acrylate, acrylonitrile, and acryloxypropyl cage polysilsesquioxane), and keeping stirring at 1500 r/min for 30 minutes to obtain a uniform prepolymer.

Preparation of organic silicone particles: adding 3 g of sodium dodecyl sulfate and 1000 g of deionized water into a dried three-necked bottle, and stirring at a high speed for 30 minutes to emulsify to obtain a uniform and stable emulsion; then using a peristaltic pump to separately and slowly add the prepolymer prepared in the previous step and an initiator solution (a solution formed by dissolving 3 g of potassium persulfate in 30 g of deionized water) in a dropwise way; and after

the dropwise addition is complete, raising the temperature to 90°C and keep at that temperature for 0.5 h in reaction, then cooling down to 40°C, adjusting the pH to 7-8 with ammonia water, followed by filtering, discharging, and a drying process to produce organic silicone particles with a number average molecular weight of 39529, and recording them as O2. O2 has a moisture content of 1500 μg/g, a particle size by volume $D_v90$ of 1.8 μm, a particle size by volume $D_v50$ of 1.2 μm, a particle size by volume $D_V10$ of 0.6 μm, and a specific surface area of 10 $m^2/g$.

**Comparative example 1**

The battery cell was prepared using a method similar to that in Example 1, except for the relevant parameters of the coating of the separator, for example, material of particles and $M/(H\cdot\rho_{organic})$. Detailed parameters are given in Table 1.

**Tests**

(1) Test for thermal shrinkage rate of separator

Sample preparation: cutting the separator prepared using a punching machine into samples with a width of 50 mm and a length of 100 mm; taking and placing 5 parallel samples on A4 paper and fixing them; and then placing the A4 paper with the samples on corrugated paper with a thickness of 1 mm to 5 mm.

Sample testing: placing the A4 paper with the samples on the corrugated paper into a blast oven, setting the temperature to 150°C for the blast oven; once the temperature has reached the set temperature and stabilized for 30 minutes, starting timing; and 1 hour later, measuring the lengths and widths of the separator samples, and marking the values with a and b, respectively.

Calculation of thermal shrinkage rate: machine-direction (MD) thermal shrinkage rate= [(100-a)/100]×100%, and transverse-direction (TD) thermal shrinkage rate= [(50-b)/50]×100%. Taking the average value of 5 parallel samples as the test result.

(2) Test for capacity retention rate of battery

At 25°C, the battery was constant-current charged at 1/3C to 4.3 V, then constant-voltage charged at 4.3 V to a current of 0.05C, left standing for 5 minutes, and then discharged at 1/3C to 2.8 V. The resulting capacity was recorded as the initial capacity $C_0$. The discharged capacity $C_{1000}$ of the battery after the 1000-th cycle was recorded, then the battery capacity retention rate $P_{1000}$ after each cycle is $C_{1000}/C_0$*100%.

Table 1 lists the test results of the coating in Examples 1 to 12 and Comparative example 1 under different parameters.

**Table 1**

| No. | Coating | | | | | Thermal shrinkage rate at 150°C for 1 h | | Capacity retention rate after 1000 cycles at 25°C (%) |
|---|---|---|---|---|---|---|---|---|
| | Type of organic materials | Mg ($m^2$) | H (μm) | $\rho_{organic}$ ($g/cm^3$) | $M/(H\cdot\rho_{organic})$ | MD (%) | TD (%) | |
| Example 1 | Organic silicone particles O1 | 1.53 | 2.66 | 1.39 | 0.41 | 2.03 | 1.56 | 93.9 |
| Example 2 | Organic silicone particles O1 | 1.53 | 2.05 | 1.39 | 0.54 | 0.53 | 0.55 | 95.2 |
| Example 3 | Organic silicone particles O1 | 1.53 | 1.78 | 1.39 | 0.62 | 0.33 | 0.35 | 94.5 |
| Example 4 | Organic silicone particles O1 | 1.53 | 1.54 | 1.39 | 0.71 | 0.29 | 0.24 | 94.1 |

(continued)

| No. | Coating | | | | | Thermal shrinkage rate at 150°C for 1 h | | Capacity retention rate after 1000 cycles at 25°C (%) |
|---|---|---|---|---|---|---|---|---|
| | Type of organic materials | Mg ($m^2$) | H (μm) | $\rho_{organic}$ ($g/cm^3$) | $M/(H\cdot\rho_{organic})$ | MD (%) | TD (%) | |
| Example 5 | Organic silicone particles O1 | 1.53 | 1.39 | 1.39 | 0.79 | 0.2 | 0.21 | 93.4 |
| Example 6 | Organic silicone particles O1 | 1.85 | 2.66 | 1.39 | 0.5 | 0.56 | 0.58 | 94.6 |
| Example 7 | Organic silicone particles O1 | 2.40 | 2.66 | 1.39 | 0.65 | 0.2 | 0.18 | 96.1 |
| Example 8 | Organic silicone particles O1 | 2.77 | 2.66 | 1.39 | 0.75 | 0.24 | 0.22 | 93.8 |
| Example 9 | Organic silicone particles O1 | 2.95 | 2.66 | 1.39 | 0.80 | 0.19 | 0.21 | 93.6 |
| Example 10 | Organic silicone particles O2 | 1.53 | 2.66 | 0.85 | 0.68 | 0.23 | 0.22 | 93.3 |
| Example 11 | Phenolic resin particles | 1.53 | 2.66 | 0.93 | 0.62 | 0.38 | 0.35 | 90.5 |
| Example 12 | Polyimide particles | 1.53 | 2.66 | 0.91 | 0.63 | 0.41 | 0.29 | 90.2 |
| Comparative example 1 | Organic silicone particles O1 | 1.02 | 2.48 | 1.39 | 0.30 | 5 | 4.3 | 86.9 |

According to Table 1, it can be learned from comparison between the test results of Examples 1 to 12 and Comparative example 1 that the coating includes granular organic materials, and the separator satisfies $M/(H \times \rho_{organic}) \geq 0.4$. This enables the rational packing of the organic materials in the coating. When the separator is heated, the mutual squeezing between the organic materials can provide a force opposite to a direction of shrinkage of the separator, reducing the shrinkage level of the separator, which in turn can reduce the risk of short circuit between the positive electrode and negative electrode in the battery using this separator, thereby providing the battery with good thermal safety performance. In addition, while allowing the organic materials to pack reasonably in the coating, this also enables the overlapping between the organic materials to form more ion transport channels. Through these ion transport channels, the infiltration of the electrolyte into the separator and its storage inside the separator can be enhanced, thereby facilitating ion transport and improving the cycling performance of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by those skilled in the art, and other manners constructed by combining some of the constituent elements in the embodiments are also included in the scope of this application.

**Claims**

1. A separator, comprising:

a substrate; and
a coating provided on at least one side of the substrate, the coating comprising granular organic materials, wherein a weight per unit area of the coating for a single side is denoted as M, a thickness of the coating for a single side is denoted as H, a true density of the organic materials is denoted as $\rho_{organic}$, and the separator satisfies: $M/(H \times \rho_{organic}) \geq 0.4$, wherein M is in unit of $g/m^2$, H is in unit of $\mu m$, and $\rho_{organic}$ is in unit of $g/cm^3$.

2. The separator according to claim 1, wherein $0.5 \leq M/(H \times \rho_{organic}) \leq 0.8$.

3. The separator according to claim 1 or 2, wherein $\rho_{organic} \leq 2.5$; and optionally, $0.8 \leq \rho_{organic} \leq 2.0$.

4. The separator according to any one of claims 1 to 3, wherein $M \geq 0.5$; and optionally, $0.7 \leq M \leq 3.0$.

5. The separator according to any one of claims 1 to 4, wherein $H \leq 3.0$; and optionally, $0.5 \leq H \leq 2.0$.

6. The separator according to any one of claims 1 to 5, wherein $M/H \geq 0.3$; and optionally, $0.5 \leq M/H \leq 1.0$.

7. The separator according to any one of claims 1 to 6, wherein a mass proportion of the organic materials in the coating is greater than or equal to 60%, optionally 75% to 95%.

8. The separator according to any one of claims 1 to 7, wherein the organic materials comprise one or more of organic silicone particles, melamine formaldehyde resin particles, phenolic resin particles, polyester particles, polyimide particles, polyamideimide particles, polyaramide particles, polyphenylene sulfide particles, polysulfone particles, polyethersulfone particles, polyether ether ketone particles, and polyaryl ether ketone particles; and
optionally, the organic materials comprise organic silicone particles.

9. The separator according to any one of claims 1 to 8, wherein the organic materials comprise organic silicone particles, and the organic silicone particle comprises a first polymer, the first polymer comprising a first structural unit, a second structural unit, and a third structural unit; wherein

the first structural unit has a structure represented by formula (I):

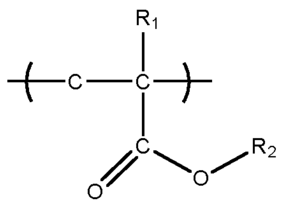
formula (I);

wherein
in the formula (I), $R_1$ comprises one or more of a hydrogen atom or a substituted or unsubstituted C1-C5 alkyl; and optionally, $R_1$ comprises one or more of a hydrogen atom or a substituted or unsubstituted C1-C3 alkyl; and
$R_2$ comprises one or more of a substituted or unsubstituted C1-C20 alkyl, a substituted or unsubstituted C3-C20 cycloalkyl, and a substituted or unsubstituted C1-C20 hydroxyalkyl; and optionally, $R_2$ comprises one or more of a C1-C12 alkyl, a C3-C12 cycloalkyl, and a C1-C12 hydroxyalkyl;
the second structural unit is represented by formula (II):

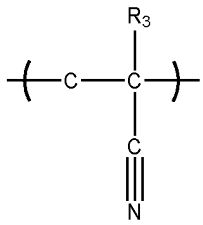

formula (II);

wherein
in the formula (II), $R_3$ comprises one or more of a hydrogen atom or a substituted or unsubstituted C1-C5 alkyl; and optionally, $R_3$ comprises one or more of a hydrogen atom or a substituted or unsubstituted C1-C3 alkyl; and the third structural unit is represented by formula (III):

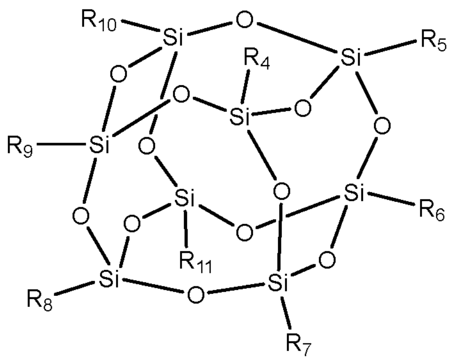

formula (III);

wherein
in the formula (III), $R_4$ to $R_{11}$ each independently comprise one or more of a substituted or unsubstituted C1-C10 alkyl or a structural unit represented by formula (III-1), and at least one of $R_4$ to $R_{11}$ is the structural unit represented by formula (III-1),

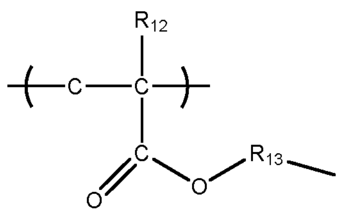

formula (III-1);

wherein
in the formula (III-1), $R_{12}$ comprises one or more of a hydrogen atom or a substituted or unsubstituted C1-C5 alkyl; and optionally, $R_{12}$ comprises one or more of a hydrogen atom or a substituted or unsubstituted C1-C3 alkyl; and $R_{13}$ comprises a substituted or unsubstituted C1-C10 alkyl; and optionally, $R_{13}$ comprises a substituted or unsubstituted C3-C10 alkyl.

**10.** The separator according to claim 9, wherein based on a total molar amount of the first structural unit, the second structural unit, and the third structural unit, a molar amount of the first structural unit is denoted as a%, wherein $70 \leq a \leq 90$; and optionally, $75 \leq a \leq 85$; and/or

based on the total molar amount of the first structural unit, the second structural unit, and the third structural unit, a molar amount of the second structural unit is denoted as b%, wherein $0 < a \leq 18$; and optionally, $2 \leq b \leq 8$; and/or
based on the total molar amount of the first structural unit, the second structural unit, and the third structural unit, a molar amount of the third structural unit is denoted as c%, wherein $0 < c \leq 15$; and optionally, $4 \leq c \leq 10$.

**11.** The separator according to claim 9 or 10, wherein based on the total molar amount of the first structural unit, the second structural unit, and the third structural unit, a molar amount of the first structural unit is denoted as a%, a molar amount of the second structural unit is denoted as b%, and a molar amount of the third structural unit is denoted as c%;

and the organic silicone particles satisfy one or more of condition (1) to condition (3):

$$(1)\ 5 \leq a/b \leq 10;$$

$$(2)\ 6 \leq a/c \leq 15;$$

and

$$(3)\ a:b:c \text{ is } (14\text{–}16):(3\text{–}4):(1\text{–}4).$$

**12.** The separator according to any one of claims 1 to 11, wherein the organic materials comprise organic silicone particles, and the organic silicone particle comprises a second polymer, the second polymer comprising a structural unit represented by formula (a):

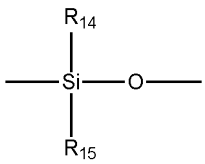
formula (a);

wherein

in the formula (a), $R_{14}$ and $R_{15}$ are each independently selected from a substituted or unsubstituted C1-C10 alkyl, hydroxyl, or amino; and optionally, $R_{14}$ and $R_{15}$ are each independently selected from a substituted or unsubstituted C1-C6 alkyl, hydroxyl, or amino; and
optionally, the second polymer comprises one or more of polymethylsiloxane, polydimethylsiloxane, polydiethylsiloxane, polymethylhydroxysiloxane, and polymethylaminosiloxane.

**13.** The separator according to any one of claims 9 to 12, wherein a number average molecular weight of the organic silicone particles is 25,000 to 60,000, optionally 30,000 to 50,000.

**14.** The separator according to any one of claims 9 to 13, wherein based on a mass of the organic silicone particles, a moisture content of the organic silicone particles is less than or equal to 3000 μg/g, optionally 700 μg/g to 2500 μg/g.

**15.** The separator according to any one of claims 9 to 14, wherein a particle size by volume $D_V90$ of the organic silicone particles satisfies: $D_V90 \leq 4.0$ μm; and optionally, 0.5 μm $\leq D_V90 \leq$ 3.0 μm;

optionally, a particle size by volume $D_V50$ of the organic silicone particles satisfies: 1.0 μm $\leq D_V50 \leq$ 2.5 μm; and optionally, the particle size distribution of the organic silicone particles satisfies: $0.5 \leq (D_V90 - D_V10)/D_V50 \leq 1.5$.

**16.** The separator according to any one of claims 9 to 15, wherein a specific surface area of the organic silicone particles is less than or equal to 35 $m^2/g$, optionally 5 $m^2/g$ to 30 $m^2/g$.

**17.** The separator according to any one of claims 1 to 16, wherein a thickness of the substrate is less than or equal to 12 μm, optionally 3 μm to 8 μm; and/or
the substrate has a porous structure, and a porosity of the substrate is greater than or equal to 20%, optionally 25% to 45%.

**18.** The separator according to any one of claims 1 to 17, wherein the separator satisfies at least one of the following characteristics:

(1) a machine-direction thermal shrinkage rate of the separator at 150°C for 1 hour is less than or equal to 3%;
(2) a transverse-direction thermal shrinkage rate of the separator at 150°C for 1 hour is less than or equal to 2%;
(3) an air permeability of the separator is less than or equal to 200 s/100mL, optionally 150 s/100mL to 200 s/100mL;

(4) a machine-direction tensile strength of the separator is greater than or equal to 2700 $kgf/cm^2$; and
(5) a transverse-direction tensile strength of the separator is greater than or equal to 2500 $kgf/cm^2$.

**19.** A preparation method of the separator according to any one of claims 1 to 18, comprising:

providing a substrate;
mixing granular organic materials in a solvent to prepare a coating slurry; and
applying the coating slurry to at least one side of the substrate to form a slurry film layer and forming a coating by drying the film layer, to obtain a separator;
wherein a weight per unit area of the coating for a single side is denoted as M, a thickness of the coating for a single side is denoted as H, a true density of the organic materials is denoted as $\rho_{organic}$, and the separator satisfies: $M/(H \times \rho_{organic}) \geq 0.4$, wherein M is in unit of $g/m^2$, H is in unit of μm, and $\rho_{organic}$ is in unit of $g/cm^3$.

**20.** A secondary battery, comprising the separator according to any one of claims 1 to 18 or a separator prepared by using the preparation method according to claim 19.

**21.** An electric apparatus, comprising the secondary battery according to claim 20.

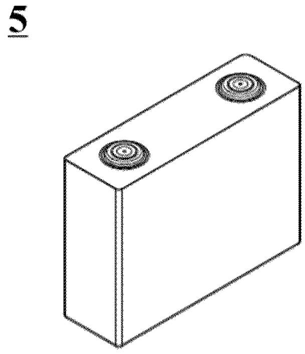


FIG. 1

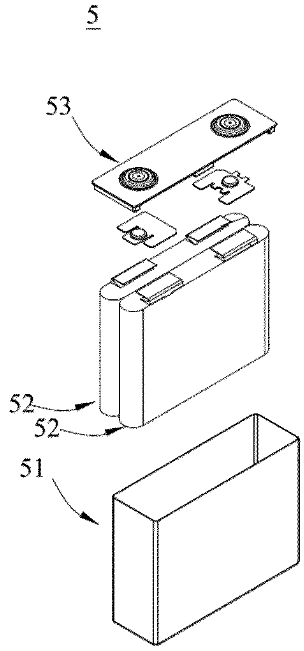


FIG. 2

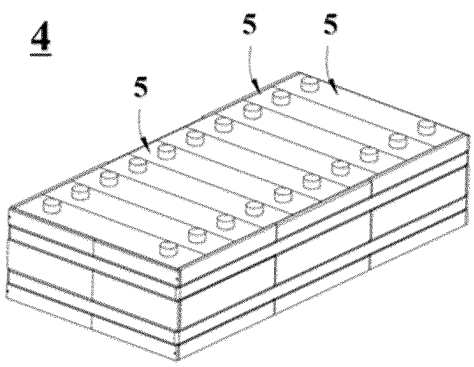


FIG. 3

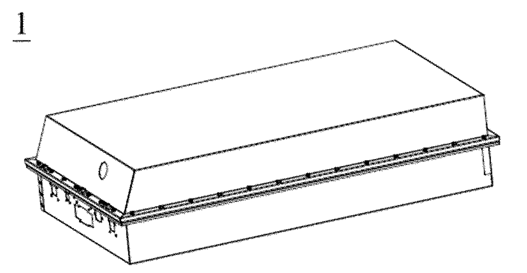


FIG. 4

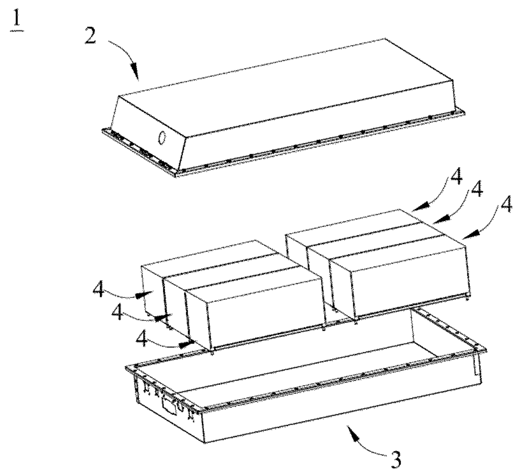


FIG. 5

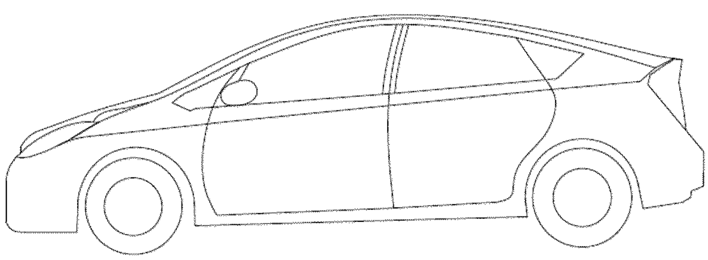

FIG. 6

## INTERNATIONAL SEARCH REPORT

International application No.
**PCT/CN2022/136431**

**A. CLASSIFICATION OF SUBJECT MATTER**

H01M50/449(2021.01)i; H01M50/40(2021.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; USTXT; EPTXT; WOTXT; ISI; CNKI: 宁德时代, 隔板, 隔膜, 隔离膜, 涂层, 修饰层, 功能层, 有机层, 有机, 聚合物, 树脂, 颗粒, 粒子, 聚芳醚酮, 聚醚, 聚砜, 聚酰亚胺, 聚酯, 丙烯酸, 腈, 硅氧烷, 堆积密度, 骨架密度, 真密度, 真实密度, 热收缩率, "150°C", separator, membrane, coating, layer, organic, particle, polymer, resin, silicone, true density, real density, shrink+

**C. DOCUMENTS CONSIDERED TO BE RELEVANT**

| Category* | Citation of document, with indication, where appropriate, of the relevant passages | Relevant to claim No. |
|---|---|---|
| X | US 2021305659 A1 (SAMSUNG SDI CO., LTD. et al.) 30 September 2021 (2021-09-30)<br>description, paragraphs [0037]-[0211] and [0238]-[0258] | 1-8, 12-21 |
| A | US 2021305659 A1 (SAMSUNG SDI CO., LTD. et al.) 30 September 2021 (2021-09-30)<br>description, paragraphs [0037]-[0211] and [0238]-[0258] | 9-11 |
| A | CN 105449140 A (NINGDE CONTEMPORARY AMPEREX TECHNOLOGY CO., LTD.) 30 March 2016 (2016-03-30)<br>entire document | 1-21 |
| A | CN 111341975 A (SICHUAN YOUYUAN NEW ENERGY CO., LTD.) 26 June 2020 (2020-06-26)<br>entire document | 1-21 |
| A | CN 114843708 A (SINOMA LITHIUM FILM (NINGXIANG) CO., LTD.) 02 August 2022 (2022-08-02)<br>entire document | 1-21 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 June 2023** | **05 July 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2022/136431**

| Patent document cited in search report | | | Publication date (day/month/year) | Patent family member(s) | | | Publication date (day/month/year) |
|---|---|---|---|---|---|---|---|
| US | 2021305659 | A1 | 30 September 2021 | KR | 20210117784 | A | 29 September 2021 |
| | | | | KR | 20210117785 | A | 29 September 2021 |
| CN | 105449140 | A | 30 March 2016 | | None | | |
| CN | 111341975 | A | 26 June 2020 | CN | 111341975 | B | 15 November 2022 |
| CN | 114843708 | A | 02 August 2022 | CN | 114843708 | B | 11 October 2022 |

Form PCT/ISA/210 (patent family annex) (July 2022)